# EUROPÄISCHE PATENTSCHRIFT

(11) **EP 0 601 028 B1**
(45) Veröffentlichungstag und Bekanntmachung des Hinweises auf die Patenterteilung: **08.02.1995**
(21) Anmeldenummer: 92918488.5
(22) Anmeldetag: 29.08.1992
(51) Int. Cl.: F16C 29/06

(54) **WÄLZLAGER FÜR LINEARBEWEGUNGEN**
ROLLING BEARING FOR LINEAR MOVEMENTS
PALIER A ROULEMENT POUR MOUVEMENT LINEAIRE

(30) Priorität: 06.09.1991 DE 4129619; 26.03.1992 DE 4209824
(43) Veröffentlichungstag der Anmeldung: 15.06.1994
(73) Patentinhaber: INA Wälzlager Schaeffler KG, 91063 Herzogenaurach (DE)
(72) Erfinder: EDER, Jean-Marie, F-67260 Woerth (FR); HOLWEG, Friedrich, D-8501 Heroldsberg (DE); Greiner, Heinz, D-73061 Ebersbach (DE)
(86) Internationale Anmeldenummer: EP9201998
(87) Internationale Veröffentlichungsnummer: WO9305308

(56) Entgegenhaltungen:
- EP-A- 0 211 243
- EP-A- 0 427 238
- DE-A- 3 931 351
- GB-A- 2 164 708
- Patent Abstracts of Japan, Band 12, Nr. 386 (M-754), 14. Oktober 1988, & JP,A,63140111 (NIPPON THOMPSON) 11. Juni 1988

## Beschreibung

Die Erfindung betrifft ein Wälzlager für Linearbewegungen mit einem längs einer Führungsschiene verschiebbaren Tragkörper, der sich über mehrere Paare von Wälzkörperumläufen an zwei Längsseiten der Führungsschiene abstützt, wobei jeder Längsseite ein einstückiger Käfig zugeordnet ist und die Wälzkörperumläufe jeweils eine von dem Käfig geführte lastübertragende Wälzkörperreihe, eine in einem Rücklaufkanal des Tragkörpers angeordnete rücklaufende Wälzkörperreihe und zwei diese Reihen an ihren Ende miteinander verbindende Wälzkörper-Umlenkbogen aufweisen, von welchen jeweils ein Teil als Fortsetzung der geradlinigen Wälzkörperreihe in dem einstückigen Käfig und der andere in einem Kopfstück angeordnet ist, das an der benachbarten Stirnfläche des Tragkörpers angesetzt ist.

Ein solches Wälzlager ist aus dem Dokument EP-A-0 427 238 bekannt. Dieses weist zwei Paare von Wälzkörperumläufen zum Abstützen des Tragkörpers an der Führungsschiene auf, so daß sich insgesamt vier Kugelumläufe mit den als Kugeln ausgebildeten Wälzkörpern ergeben. Die von dem Tragkörper auf die Führungsschiene übertragbare Kraft wird durch die vier lastübertragenden Wälzkörperreihen der Wälzkörperumläufe begrenzt. So läßt sich mit diesen vier Wälzkörperumläufen nur eine bestimmte maximale statische bzw. dynamische Tragzahl des Wälzlagers erzielen. Einer Erhöhung der Tragzahlen durch Erhöhung der Anzahl der Wälzkörperumläufe bei sonst gleichen baulichen Gegebenheiten des Wälzlagers steht aber die Schwierigkeit der Gestaltung der beiden Käfige entgegen, die für die Lagerseiten jeweils einstückig für mehrere lastübertragende Wälzkörperreihen ausgebildet sein sollen. Sofern ein solcher Käfig als Spritzgußteil aus einem polymeren Werkstoff hergestellt werden soll, ergeben sich komplizierte Spritzwerkzeuge. Erwünscht ist, das Werkstück in einfacher Weise spritzen und entformen zu können. Dabei soll ein Werkzeug verwendet werden können, das möglichst einfach aufgebaut ist und keine zusätzlichen Schieber benötigt. Der Käfig nach dem vorbekannten Wälzlager ist für zwei lastübertragende Wälzkörperreihen so ausgeführt, daß er sich in senkrechter Richtung entformen läßt.

Aus dem Dokument EP-A-0 211 243 ist ein Wälzlager für Linearbewegungen mit vier Wälzkörperumläufen bekannt, bei dem jeder Käfig von zwei in Flucht zueinander liegenden und an ihren Enden zusammenstoßenden achsparallelen Haltestegen gebildet ist. Zwei lastübertragende Wälzkörperreihen eines Paars von Wälzkörperumläufen sind jeweils an ihren anderen Enden einstückig mit dem Kopfstück ausgeführt. Ein solches Bauteil läßt sich in einem Spritzwerkzeug ohne Schieber herstellen und daraus entformen, wenn die Entformung in Längsrichtung des Käfigs erfolgt. Hier muß also im günstigsten Fall der Werkzeugweg etwas größer sein, als die halbe Käfiglänge, so daß sich hier der Nachteil großer Entformungswege ergibt. Mit diesen sind aber auch große Taktzeiten beim Herstellungsprozeß in der Serienfertigung verbunden. Dieses Wälzlager hat außerdem den Nachteil, daß durch die Trennfuge auf der Käfiglänge im eingebauten Zustand der Käfige Stabilitätsverluste entstehen, die durch zusätzliche Befestigungsmaßnahmen, wie in Käfiglängsrichtung der beiden Käfighälften verlaufende Nuten oder Bohrungen und darin eingesteckte Paßstifte, ausgeglichen werden müssen.

Der Erfindung liegt die Aufgabe zugrunde, ein in einfacher Weise herstellbares und montierbares Lager zu schaffen, mit dem bei gleichen Außenabmessungen seiner Bauteile höhere Tragzahlen und Quersteifigkeiten erzielbar sind, so daß eine größere Lastübertragung möglich ist. Dabei soll in allen Lagerquerrichtungen möglichst eine annähernd gleiche Belastbarkeit und Steifigkeit erreichbar sein.

Diese Aufgabe wird nach einem ersten Vorschlag erfindungsgemäß dadurch gelöst, daß sich an dem Tragkörper mindestens sechs Wälzkörperumläufe in drei Paaren befinden und in jedem Käfig die drei lastübertragenden Wälzkörperreihen parallel zueinander und senkrecht übereinander angeordnet sind, wobei der Käfig einen unteren Steg, darüber einen führungsschienenseitigen Steg, darüber einen tragkörperseitigen Steg und über diesem einen oberen Steg aufweist und die Stege sich gegenseitig in waagerechter Richtung nicht überdecken. Ein solcher Käfig ermöglicht dann die Herstellung als Spritzteil in einem Spritzwerkzeug, bei dem eine waagerechte Entformung rechtwinklig zur Käfiglängserstreckung erfolgen kann. Da der Käfig in dieser Richtung nur geringe Abmessungen hat, ergeben sich bei der Serienherstellung auch nur geringe Taktzeiten für seinen Herstellungsprozeß.

Nach einem weiteren Vorschlag der Erfindung sind für einen Tragkörper mit acht Wälzkörperumläufen in vier Paaren vorteilhaft in jedem Käfig die vier lastübertragenden Wälzkörperreihen parallel zueinander und im Querschnitt in zwei Ebenen angeordnet, die einen Winkel miteinander bilden, wobei einer Ebene jeweils zwei durch einen Zwischensteg getrennte Wälzkörperreihen zugeordnet sind und der Käfig außerdem einen unteren Steg, schräg darüber einen mittleren Steg und schräg über diesem einen oberen Steg aufweist, wobei sich alle Stege gegenseitig in waagerechter Richtung nicht überdecken. Auch ein solcher Käfig ermöglicht eine einfache Herstellung in einem Spritzwerkzeug ohne Schieber mit geringen Taktzeiten.

Für eine günstige Herstellungsmöglichkeit und leichte Ausführung der Käfigbauteile sind vorteilhaft die Kopfstücke und/oder die Käfige aus einem polymeren Werkstoff hergestellt. Eine gute Montagemöglichkeit ergibt sich für den Tragkörper mit den beiden Käfigen und den beiden Kopfstücken dadurch, daß an jedem Wälzkörperumlauf der in dem Käfig befindliche Teil und der in dem Kopfstück befindliche Teil des Wälzkörper-Umlenkbogens sich jeweils über einen Winkel von 90° erstrecken. Dadurch ergeben sich zwischen den Kopfstücken und den aus dem Tragkörper in Bewegungsrichtung des Tragkörpers herausragenden Enden der Käfige Trennfugen, die parallel zur Bewegungsrichtung des Tragkörpers verlaufen, so daß es möglich ist, die Kopfstücke in dieser Richtung an den mit den beiden Käfigen bereits versehenen Tragkörper stirnseitig anzustecken.

Die Kopfstücke weisen bevorzugt nach innen abstehende Befestigungszapfen auf, die in entsprechende Ausnehmungen der Käfige passend eingreifen. Nur durch das Aufstecken der Kopfstücke auf die beiden Stirnseiten des Tragkörpers und das gleichzeitige Umfassen der Enden der in den Tragkörpern befindlichen Käfige ist somit bereits eine feste Montage der Bauteile erfolgt. Anschließend können die Kopfstücke an dem Tragkörper durch Schrauben befestigt werden.

Eine weitere Befestigungsmöglichkeit ergibt sich dadurch, daß an den Kopfstücken und den Käfigen gemeinsame, jeweils von einem Teil des Kopfstücks und einem Teil des Käfigs gebildete, nach außen abstehende Befestigungszapfen ausgebildet sind. Auf alle so zusammengesetzten Befestigungszapfen kann dann eine gemeinsame Platte mit entsprechenden Ausnehmungen, in die die Zapfen passend eingreifen, aufgesteckt werden. Dadurch ergibt sich eine feste und stabile Ausführung des Wälzlagers.

Die Wälzkörperlaufbahnen der lastübertragenden Wälzkörperreihen der Führungsschiene und des Tragkörpers können im Querschnitt geneigt angeordnet sein, wobei sie dann mit den Senkrechten Druckwinkel bilden. Jeweils die Druckwinkel eines Paars von Wälzkörperumläufen und die Druckwinkel eines weiteren Paars von Wälzkörperumläufen können unterschiedliche Beträge aufweisen. Infolge dieser Ausbildung mit unterschiedlichen Druckwinkeln kann erreicht werden, daß sich für Zug- und Seitenbelastungen des Lagers gleiche Tragzahlen und eine höhere Zugsteifigkeit ergeben. Dabei können die Wälzkörperlaufbahnen Kugellaufbahnen sein, deren mittlere Tangenten mit den Senkrechten Druckwinkel bilden.

An dem Tragkörper sind mindestens sechs Wälzkörperumläufe in drei Paaren übereinander angeordnet, wobei jeweils die Druckwinkel des mittleren Paars von Wälzkörperumläufen größer sind, als die Druckwinkel des oberen und des unteren Paars von Wälzkörperumläufen. Soll das Lager sechs oder mehr Kugelreihen erhalten, so läßt sich dieses ohne großen Kostenaufwand durchführen, da bei seiner Herstellung die Verwendung gleicher Bauteile möglich ist. Ein Lager mit sechs Kugelreihen, also drei Paaren von Wälzkörperumläufen eignet sich besonders gut für den Einbau in sehr genau arbeitende Werkzeugmaschinen, an welche die Forderung einer hohen Steifigkeit gestellt wird.

Der Druckwinkel des oberen und des unteren Paars von Wälzkörperumläufen kann beispielsweise jeweils 45° betragen, während der Druckwinkel des mittleren Paars von Wälzkörperumläufen jeweils 60° betragen kann. Die Kugellaufbahnen der lastübertragenden Wälzkörperreihen der Führungsschiene und des Tragkörpers können im Querschnitt geneigt angeordnet sein, wobei ihre mittleren Tangenten mit den Senkrechten Druckwinkel bilden, die bei allen Paaren von Wälzkörperumläufen gleich sind.

Ausführungsbeispiele der Erfindung sind in der Zeichnung dargestellt und werden im folgenden näher beschrieben. Es zeigen:
- Fig. 1: eine Wälzlagereinheit mit einem Tragkörper, der längs einer Führungsschiene verschiebbar ist, in einem rechtwinklig zur Verschiebungsrichtung verlaufenden Schnitt gemäß Linie I-I der Figur 2, wobei die Führungsschiene jedoch nicht schraffiert dargestellt wurde;
- Fig. 2: eine Draufsicht auf den Tragkörper;
- Fig. 3: eine Unteransicht des mit Wälzkörperumläufen versehenen Tragkörpers;
- Fig. 4: eine stirnseitige Innenansicht eines Kopfstücks der Wälzlagereinheit;
- Fig. 5: eine Draufsicht auf das Kopfstück mit einem Teilschnitt gemäße Linie V-V der Figur 4;

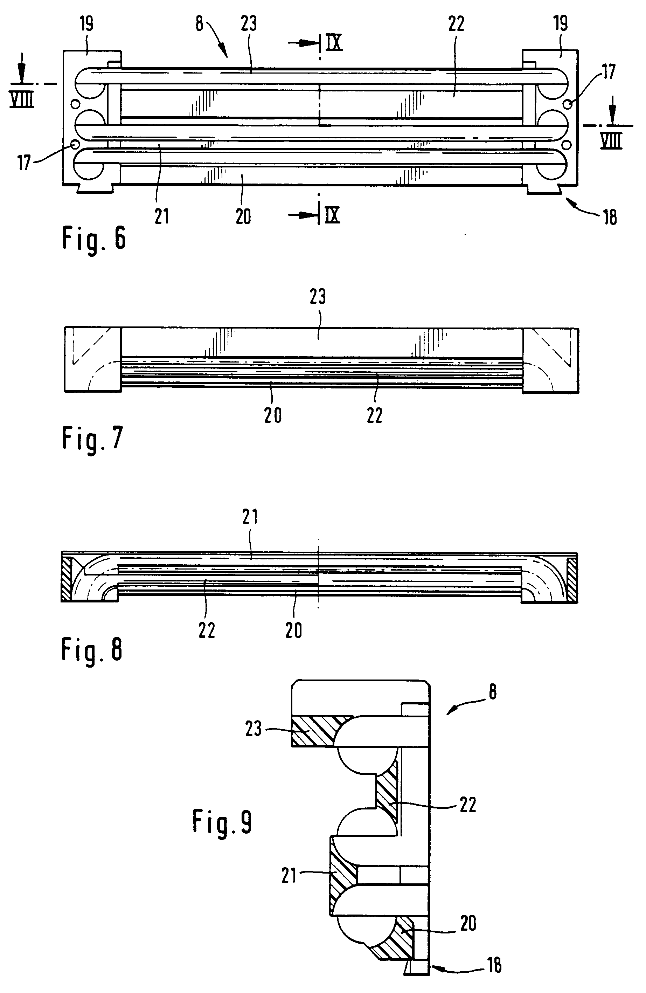

- Fig. 6: eine Seitenansicht eines Käfigs der Wälzlagereinheit;
- Fig. 7: eine Draufsicht auf den Käfig;
- Fig. 8: einen waagerechten Schnitt durch den Käfig gemäß Linie VIII-VIII der Figur 6;
- Fig. 9: einen senkrechten Schnitt durch den Käfig gemäß Linie IX-IX der Figur 6 in vergrößerter Darstellung;
- Fig. 10: eine Seitenansicht eines anderen Käfigs;
- Fig. 11: einen senkrechten Schnitt gemäß Linie XI-XI der Figur 10 in vergrößerter Darstellung;
- Fig. 12: die Wälzlagereinheit gemäß Figur 1 in einem Querschnitt in vergrößertem Maßstab, ohne Darstellung des erforderlichen Käfigs.

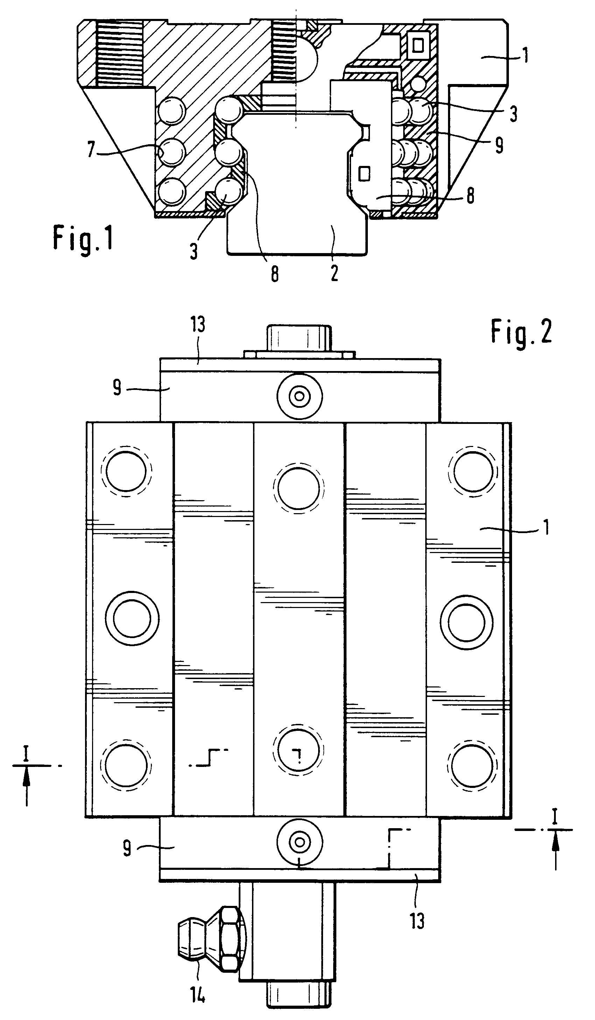

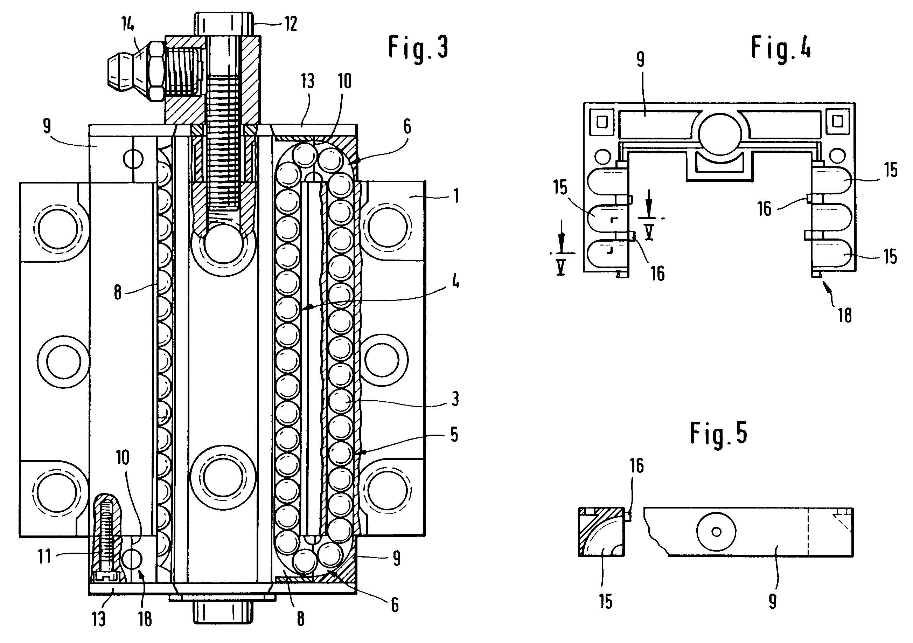

Die Wälzlagereinheit nach den Figuren 1 bis 3 besteht aus einem Tragkörper 1, der längs einer waagerechten Führungsschiene 2 verschiebbar gelagert ist. Hierzu dienen drei Paare von Wälzkörperumläufen mit als Kugeln 3 ausgebildeten Wälzkörpern, die sich einerseits an Laufbahnen des Tragkörpers 1 und andererseits an Laufbahnen der Führungsschiene 2 abstützen, wobei von jedem Wälzkörperumlaufpaar ein Wälzkörperumlauf an einer Längsseite der Führungsschiene und der andere Wälzkörperumlauf an der anderen Längsseite der Führungsschiene 2 angeordnet ist. Die drei Wälzkörperumlaufpaare jeder Seite sind senkrecht übereinander angeordnet.

Jeder Wälzkörperumlauf besteht aus einer lastübertragenden Wälzkörperreihe 4, einer dazu parallelen rücklaufenden Wälzkörperreihe 5 und zwei Wälzkörper-Umlenkbogen 6, die an den Enden der Wälzkörperreihen 4 und 5 angrenzen und diese Reihen miteinander verbinden. Bei der Bewegung durchläuft die rücklaufende Wälzkörperreihe 5 einen Rücklaufkanal 7, der für den Wälzkörperumlauf jeweils in dem Tragkörper 1 angeordnet ist. Die lastübertragenden Wälzkörperreihen 4 aller drei Wälzkörperumläufe einer Seite der Führungsschiene 2 werden von einem gemeinsamen Käfig 8 geführt, der in dem Tragkörper 1 für jede Seite der Führungsschiene 2 angeordnet ist und in Bewegungsrichtung des Tragkörpers 1 an beiden Enden aus diesem herausragt, wo seine Wälzkörperreihe 4 in die Wälzkörperumlaufbahn 6 übergeht.

An jeder Stirnseite des Tragkörpers 1 sind die beiden aus dem Tragkörper herausragenden Enden der Käfige 8 von einem Kopfstück 9 umgeben, in welchem der weitere Teil der Wälzkörper-Umlenkbogen angeordnet ist. Im Ausführungsbeispiel erstrecken sich die Teile der Wälzkörper-Umlenkbogen des Käfigs und des Kopfstücks jeweils über 90°, so daß sich hier eine Trennfuge 10 zwischen den Käfigen und den Kopfstücken 9 ergibt, die jeweils parallel zur Bewegungsrichtung des Tragkörpers 1 verläuft. Die Kopfstücke 9 sind mit Hilfe von Schrauben 11 an dem Tragkörper 1 befestigt, weitere Schrauben 12 dienen der Befestigung von Abstreiferplatten 13 und eines Schmiernippels 14 an dem Tragkörper 1.

Jedes Kopfstück 9 weist an seiner Innenseite zwischen je zwei bogenförmigen Kanälen 15 für die Teile der Wälzkörper-Umlenkbögen 6 waagerecht abstehende Befestigungszapfen 16 auf, die für den Eingriff in Ausnehmungen 17 der Käfige 8 vorgesehen sind und die Befestigung der Kopfstücke 9 an den Käfigen 8 sichern. Außerdem sind an den Kopfstücken 9 senkrecht abstehende Befestigungszapfen ausgebildet, die mit entsprechenden Zapfenteilen der Käfige 8 integriert sind und mit diesen gemeimsame Befestigungszapfen 18 bilden. Durch Eingriff dieser Befestigungszapfen 18 in Ausnehmungen einer gemeinsamen aufgesteckten Montageplatte ergibt sich eine weitere Befestigung der Bauteile der Wälzlagereinheit aneinander.

Die Käfige 8 bestehen aus mehreren übereinander angeordneten und innerhalb des Tragkörpers 1 befindlichen waagerechten Stegen, die außerhalb des Tragkörpers 1 an ihren Enden in gemeinsame Verbindungsstücke 19 übergehen. So weist der Käfig 8 für die Führung der Kugeln 3 der lastübertragenden Wälzkörperreihen 4 einen unteren Steg 20, einen darüber befindlichen führungsschienenseitigen Steg 21, einen darüber befindlichen tragkörperseitigen Steg 22 und einen darüber befindlichen oberen Steg 23 auf. Diese übereinander angeordneten Stege überdecken sich in waagerechter Richtung nicht, so daß es möglich ist, den Käfig 8 nach dem Spritzvorgang in waagerechter, rechtwinklig zur Längsrichtung des Käfigs 8 verlaufender Richtung zu Entformen. Die Verwendung von zusätzlichen Schiebern in dem Spritzwerkzeug kann dadurch vermieden werden.

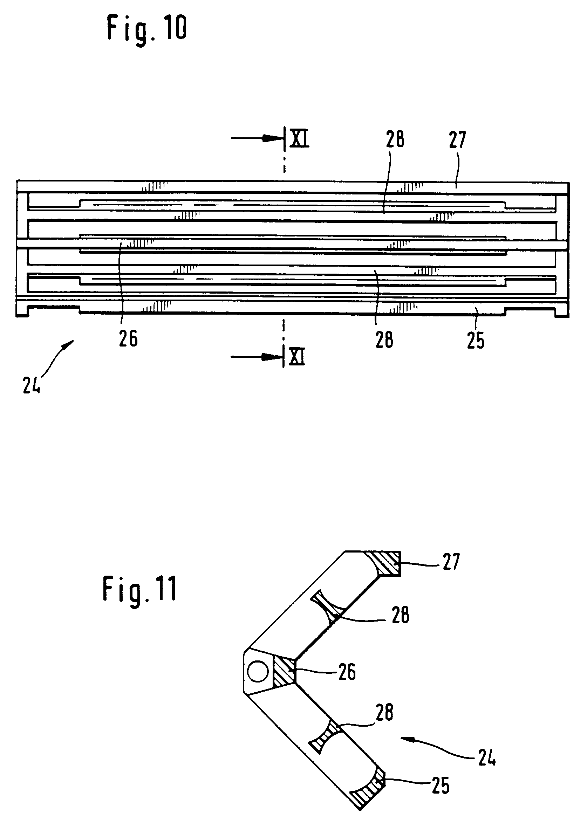

Denselben Vorteil weist auch der Käfig 24 nach den Figuren 10 und 11 der Zeichnung auf, dieser besteht aus einem unteren Steg 25, einem mittleren Steg 26 und einem oberen Steg 27. Jeweils zwischen dem unteren Steg 25 und dem mittleren Steg 26 und zwischen dem mittleren Steg 26 und dem oberen Steg 27 befindet sich ein Zwischensteg 28, wobei alle Stege so übereinander angeordnet sind, daß sie sich in waagerechter Richtung nicht überdecken und das Spritzen des Käfigs 24 in einem Spritzwerkzeug ohne zusätzliche Schieber ermöglichen.

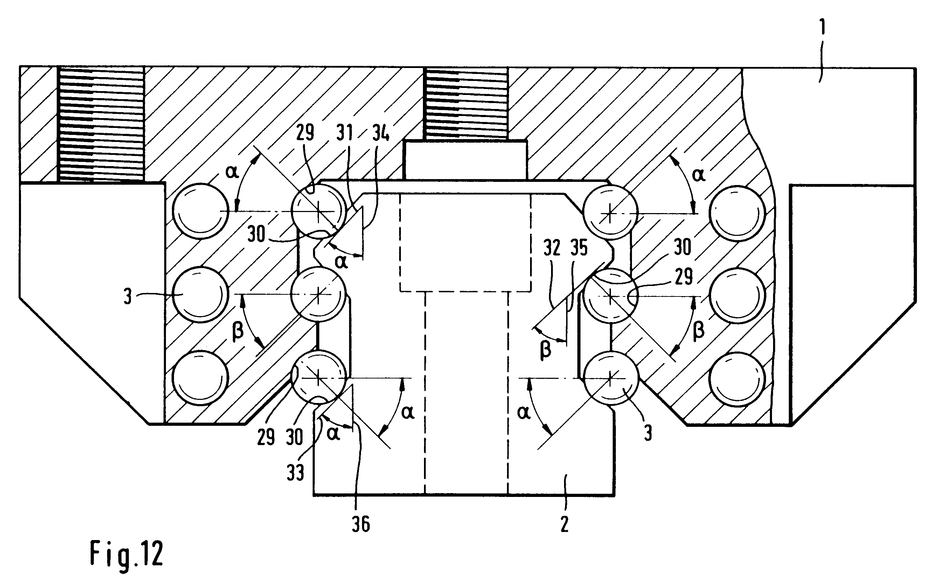

Das Wälzlager wurde in Figur 12 vergrößert dargestellt, um die Winkelverhältnisse an den Kugellaufbahnen besser erklären zu können. Sowohl am Tragkörper 1, als auch an der Führungsschiene 2 sind die Kugellaufbahnen 29 des Tragkörpers 1 und die Kugellaufbahnen 30 der Führungsschiene 2 für die lastübertragenden Wälzkörperreihen gegenüber den Senkrechten geneigt angeordnet.

Diese Laufbahnen sind mit gewölbter Oberfläche rillenförmig ausgeführt, da als Wälzkörper Kugeln 3 verwendet sind. Daher verlaufen genauer gesagt die mittleren Tangenten 31, 32 und 33 der Kugellaufbah nen 30 geneigt gegenüber den Senkrechten 34, 35 und 36. Diese Verhältnisse sind nur für die Wälzkörperlaufbahnen der Führungsschiene 2 dargestellt, bestehen in entsprechender Weise aber auch an den Wälzkörperlaufbahnen des Tragkörpers 1.

Im vorliegenden Ausführungsbeispiel, bei dem drei Paare von Wälzkörperumläufen übereinander angeordnet sind, bildet jeweils die Tangente 31 mit der Senkrechten 34 des obersten Paars von Wälzkörperumläufen und die Tangente 33 mit der Senkrechten 36 des untersten Paars von Wälzkörperumläufen einen Winkel α, während jeweils die Tangente 32 mit der Senkrechten 35 des mittleren Paars von Wälzkörperumläufen einen Winkel β bildet. Erfindungsgemäß kann der Winkel β größer sein als der Winkel α. Entsprechend den mathematisch-geometrischen Gesetzen werden die Winkel α bzw. β auch von den durch die Mittelpunkte der Kugeln 3 verlaufenden Normalen der Tangenten 31 und 33 und den Waagerechten bzw. von der Tangente 32 und der Waagerechten gebildet.

### Bezugszahlenliste

- 1: Tragkörper
- 2: Führungsschiene
- 3: Kugel
- 4: lastübertragende Wälzkörperreihe
- 5: rücklaufende Wälzkörperreihe
- 6: Wälzkörper-Umlenkbogen
- 7: Rücklaufkanal
- 8: Käfig
- 9: Kopfstück
- 10: Trennfuge
- 11: Schraube
- 12: Schraube
- 13: Abstreiferplatte
- 14: Schmiernippel
- 15: Kanal
- 16: Befestigungszapfen
- 17: Ausnehmung
- 18: Befestigungszapfen
- 19: Verbindungsstück
- 20: unterer Steg
- 21: führungsschienenseitiger Steg
- 22: tragkörperseitiger Steg
- 23: oberer Steg
- 24: Käfig
- 25: unterer Steg
- 26: mittlerer Steg
- 27: oberer Steg
- 28: Zwischensteg
- 29: Kugellaufbahn
- 30: Kugellaufbahn
- 31: Tangente
- 32: Tangente
- 33: Tangente
- 34: Senkrechte
- 35: Senkrechte
- 36: Senkrechte
- α: Winkel
- β: Winkel

## Patentansprüche

1. Wälzlager für Linearbewegungen mit einem längs einer Führungsschiene (2) verschiebbaren Tragkörper (1), der sich über mehrere Paare von Wälzkörperumläufen an zwei Längsseiten der Führungsschiene (2) abstützt, wobei jeder Längsseite ein einstückiger Käfig (8) zugeordnet ist und die Wälzkörperumläufe jeweils eine von dem Käfig (8) geführte lastübertragende Wälzkörperreihe (4), eine in einem Rücklaufkanal (7) des Tragkörpers (1) angeordnete rücklaufende Wälzkörperreihe (5) und zwei diese Reihen an ihren Enden miteinander verbindende Wälzkörper-Umlenkbogen (6) aufweisen, von welchen jeweils ein Teil als Fortsetzung der geradlinigen Wälzkörperreihe in dem einstückigen Käfig (8) und der andere Teil in einem Kopfstück (9) angeordnet ist, das an der benachbarten Stirnfläche des Tragkörpers (1) angesetzt ist, **dadurch gekennzeichnet**, daß sich an dem Tragkörper (1) mindestens sechs Wälzkörperumläufe in drei Paaren befinden und in jedem Käfig (8) die drei lastübertragenden Wälzkörperreihen (4) parallel zueinander und senkrecht übereinander angeordnet sind, wobei der Käfig (8) einen unteren Steg (20), darüber einen führungsschienenseitigen Steg (21), darüber einen tragkörperseiten Steg (22) und über diesem einen oberen Steg (23) aufweist und die Stege (20 bis 23) sich gegenseitig in waagerechter Richtung nicht überdecken.

2. Wälzlager für Liniearbewegungen mit einem längs einer Führungsschiene (2) verschiebbaren Tragkörper, der sich über mehrere Paare von Wälzkörperumläufen an zwei Längsseiten der Führungsschiene (2) abstützt, wobei jeder Längsseite ein einstückiger Käfig (24) zugeordnet ist und die Wälzkörperumläufe jeweils eine von dem Käfig (24) geführte lastübertragende Wälzkörperreihe, eine in einem Rücklaufkanal des Tragkörpers angeordnete rücklaufende Wälzkörperreihe und zwei diese Reihen an ihren Enden miteinander verbindende Wälzkörper-Umlenkbogen aufweisen, die an der benachbarten Stirnfläche des Tragkörpers angrenzen, **dadurch gekennzeichnet**, daß sich an dem Tragkörper acht Wälzkörperumläufe in vier Paaren befinden und in jedem Käfig (24) die vier lastübertragenden Wälzkörperreihen parallel zueinander und im Querschnitt in zwei Ebenen angeordnet sind, die einen Winkel miteinander bilden, wobei einer Ebene jeweils zwei durch einen Zwischensteg (28) getrennte Wälzkörperreihen zugeordnet sind, und daß der Käfig (24) außerdem einen unteren Steg (25), schräg darüber einen mittleren Steg (26) und schräg über diesem einen oberen Steg (27) aufweist, wobei sich die Stege (25 bis 27) gegenseitig in waagerechter Richtung nicht überdecken.

3. Wälzlager nach Anspruch 1 oder 2, **dadurch gekennzeichnet**, daß die Kopfstücke (9) und/oder die Käfige (8, 24) aus einem polymeren Werkstoff hergestellt sind und an jedem Wälzkörperumlauf der in dem Käfig (8, 24) befindliche Teil und der in dem Kopfstück (9) befindliche Teil des Wälzkörper-Umlenkbogens (6) sich jeweils über einen Winkel von 90° erstrecken.

4. Wälzlager nach Anspruch 2, **dadurch gekennzeichnet**, daß der Winkel zwischen den beiden Ebenen der Wälzkörperreihen 90° beträgt.

5. Wälzlager nach Anspruch 1, **dadurch gekennzeichnet**, daß die Kopfstücke (9) nach innen abstehende Befestigungszapfen (16) aufweisen, die in entsprechende Ausnehmungen (17) der Käfige (8) passend eingreifen, und daß an den Kopfstücken (9) und den Käfigen (8) gemeinsame, jeweils von einem Teil des Kopfstücks (9) und einem Teil des Käfigs (8) gebildete, nach außen abstehende Befestigungszapfen (18) ausgebildet sind.

6. Wälzlager nach Anspruch 1, **dadurch gekennzeichnet**, daß die Wälzkörperlaufbahnen der lastübertragenden Wälzkörperreihen des Tragkörpers (1) und der Führungsschiene (2) im Querschnitt geneigt angeordnet sind, wobei sie mit den Senkrechten (34, 35, 36) Druckwinkel (α, β) bilden, und daß jeweils die Druckwinkel (α) eines Paares von Wälzkörperumläufen und die Druckwinkel (β) eines weiteren Paares von Wälzkörperumläufen unterschiedliche Beträge aufweisen.

7. Wälzlager nach Anspruch 6, **dadurch gekennzeichnet**, daß die Wälzkörperlaufbahnen Kugellaufbahnen (29, 30) sind, deren mittlere Tangenten (31, 32, 33) mit den Senkrechten (34) die Druckwinkel (α, β) bilden, wobei jeweils der Druckwinkel (β) des mittleren Paares von Wälzkörperumläufen größer ist, als der Druckwinkel (α) des oberen und des unteren Paares von Wälzkörperumläufen.

8. Wälzlager nach Anspruch 7, **dadurch gekennzeichnet**, daß der Druckwinkel (α) des oberen und des unteren Paares von Wälzkörperumläufen 45° und der Druckwinkel (β) des mittleren Paares von Wälzkörperumläufen 60° beträgt.

9. Wälzlager nach Anspruch 1, **dadurch gekennzeichnet**, daß die Wälzkörperlaufbahnen der lastübertragenden Wälzkörperreihen der Führungsschiene (2) und des Tragkörpers (1) im Querschnitt geneigt angeordnet sind, wobei sie mit Senkrechten Druckwinkel (α) bilden, die bei allen Paaren von Wälzkörperumläufen gleich sind.

10. Wälzlager nach Anspruch 9, **dadurch gekennzeichnet**, daß die Wälzkörperlaufbahnen als Kugellaufbahnen (29, 30) ausgebildet sind, deren mittlere Tangenten (31, 32, 33) mit den Senkrechten (34, 35, 36) die Druckwinkel (α) bilden.

## Claims

1. Rolling bearing for linear movements comprising a carrier (1) which is displaceable along a guide rail (2) and supported on two longitudinal sides of the guide rail (2) on several pairs of rolling element circuits, a one-piece cage (8) being associated with each longitudinal side and each rolling element circuit being comprised of one row (4) of load-transmitting rolling elements guided by the cage (8), one row (5) of returning rolling elements arranged in a return canal (7) in the carrier (1) and two rolling element deflector arches (6) connecting these rows to each other at their ends, one part of each deflector arch (6) being arranged in the one-piece (8) cage as a continuation of the rectilinear row of rolling elements and the other part being arranged in a head piece (9) disposed on the adjacent end face of the carrier (1), characterized in that at least six rolling element circuits are disposed in three pairs on the carrier (1), the three load-transmitting rolling element rows (4) in each cage (8) are arranged parallel to and vertically above one another, and the cage (8) comprises a lower web (20), above this, a guide rail-side web (21), above this, a carrier-side web (22), and above this, an upper web (23) with no overlap between the webs (20 to 23) in the horizontal direction.

2. Rolling bearing for linear movements comprising a carrier which is displaceable along a guide rail (2) and supported on two longitudinal sides of the guide rail (2) on several pairs of rolling element circuits, a one-piece cage (24) being associated with each longitudinal side and each rolling element circuit being comprised of one row of load-transmitting rolling elements guided by the cage (24), one row of returning rolling elements arranged in a return canal in the carrier and two rolling element deflector arches connecting these rows to each other at their ends and arranged adjacent to the end faces of the carrier, characterized in that eight rolling element circuits are disposed in four pairs on the carrier, the four load-transmitting rolling element rows in each cage (24) are arranged parallel to one another in two planes which, as viewed in a cross-section, form an angle with each other, two rows of rolling elements separated by an intermediate web (28) being associated with each plane, and the cage (24) additionally comprises a lower web (25), obliquely above this, a central web ( 26), and obliquely above this, an upper web (27) with no overlap between any of the webs (25 to 27) in the horizontal direction.

3. Rolling bearing according to claim 1 or 2, characterized in that the head pieces (9) and/or the cages (8, 24) are made of a polymeric material, and the part of the rolling element deflector arch (6) of each rolling element circuit located in the cage (8, 24) and the part located in the head piece (9) each extends through an angle of 90°.

4. Rolling bearing according to claim 2, characterized in that the angle between the two planes of the rolling element rows is 90°.

5. Rolling bearing according to claim 1, characterized in that the head pieces (9) comprise inwards projecting fixing pegs (16) which fit into corresponding recesses (17) in the cages (8), and outwards projecting fixing pegs (18) are formed jointly on the head pieces (9) and the cages (8), each one by a part of the head piece (9) and a part of the cage (8).

6. Rolling bearing according to claim 1, characterized in that the rolling element tracks of the load-transmitting rolling element rows on the carrier (1) and on the guide rail (2) are arranged inclined as seen in a cross-section so that they form pressure angles (α, β) with the normals (34, 35, 36), and the pressure angles (α) of one pair of rolling element circuits are different from the pressure angles (β) of another pair of rolling element circuits.

7. Rolling bearing according to claim 6, characterized in that the rolling element tracks are ball tracks (29, 30) whose central tangents (31, 32, 33) form the pressure angles (α, β) with the normals (34, 35, 36), and the pressure angle (β) of the central pair of rolling element circuits is larger than the pressure angle (α) of the upper and the lower pair of rolling element circuits.

8. Rolling bearing according to claim 7, characterized in that the pressure angle (α) of the upper and the lower pair of rolling element circuits is 45° and the pressure angle (β) of the central pair of rolling element circuits is 60°.

9. Rolling bearing according to claim 1, characterized in that the rolling element tracks of the load-transmitting rolling element rows on the guide rail (2) and on the carrier (1) are arranged inclined as viewed in a cross-section and form the same pressure angle (α) with the normals in all pairs of rolling element circuits.

10. Rolling bearing according to claim 9, characterized in that the rolling element tracks are configured as ball tracks (29, 30) whose central tangents (31, 32, 33) form the pressure angles (α) with the normals (34, 35, 36).

## Revendications

1. Palier à roulement pour mouvements linéaires comprenant un corps de support (1) monté en coulissement le long d'un rail de guidage (2) et qui s'appuie par l'intermédiaire de plusieurs paires de circulations à corps roulants sur deux côtés longitudinaux du rail de guidage (2), une cage monopièce (8) étant associée à chacun desdits côtés longitudinaux et chacune des circulations à corps roulants comprenant une rangée de corps roulants (4) guidée par la cage (8) et transmettant la charge, une rangée de corps roulants (5) de retour agencée dans un canal de retour (7) prévu dans le corps de support (1), ainsi que deux arcs de renvoi (6) de corps roulants qui relient lesdites rangées de corps roulants l'une à l'autre à leurs extrémités, une partie de chaque arc de renvoi (6) étant agencée dans la cage monopièce (8) en formant un prolongement de la rangée rectiligne et l'autre partie de chaque arc de renvoi (6) étant disposée dans une pièce de tête (9) qui est rapportée sur la face frontale voisine du corps de support (1), caractérisé en ce qu'au moins six circulations à corps roulants sont agencées en trois paires sur le corps de support (1), et en ce que, dans chacune des cages (8), les trois rangées de corps roulants (4) transmettant la charge sont agencées en parallèle, l'une par rapport à l'autre, en étant disposées l'une verticalement en-dessus de l'autre, la cage (8) comprenant une entretoise inférieure (20), en-dessus de celle-ci, une entretoise (21) du côté rail de guidage, en-dessus de celle-ci, une entretoise (22) du côté corps de support, et en-dessus de celle-ci, une entretoise supérieure (23), lesdites entretoises (20 à 23) ne se recouvrant pas en direction horizontale.

2. Palier à roulement pour mouvements linéaires comprenant un corps de support (1) monté en coulissement le long d'un rail de guidage (2) et qui s'appuie par l'intermédiaire de plusieurs paires de circulations à corps roulants sur deux côtés longitudinaux du rail de guidage (2), une cage monopièce (24) étant associée à chacun desdits côtés longitudinaux et chacune des circulations à corps roulants comprenant une rangée de corps roulants guidée par la cage (24) et transmettant la charge, une rangée de corps roulants de retour agencée dans un canal de retour prévu dans le corps de support, ainsi que deux arcs de renvoi de corps roulants qui relient lesdites rangées de corps roulants l'une à l'autre à leurs extrémités, lesdits arcs de renvoi étant agencés en aboutissement sur la face frontale voisine du corps de support, caractérisé en qu'au moins huit circulations à corps roulants sont agencées en quatre paires sur le corps de support, et en ce que, dans chacune des cages (24), les quatre rangées de corps roulants transmettant la charge sont agencées en parallèle, l'une par rapport à l'autre, en étant disposées dans deux plans qui, en section droite, forment un angle entre eux, il étant associé à chacun des plans, deux rangées de corps roulants séparées l'une de l'autre par une entretoise (28), la cage (24) comprenant, en plus, une entretoise inférieure (25), obliquement en-dessus de celle-ci, une entretoise centrale (26), et obliquement en-dessus de celle-ci, une entretoise supérieure (27), lesdites entretoises (25 à 27) ne se recouvrant pas en direction horizontale.

3. Palier à roulement selon l'une des revendications 1 ou 2, caractérisé en ce que les pièces de tête (9) et/ou les cages (8, 24) sont réalisées en une matière polymère, et en ce que, dans chaque circulation à corps roulants, la partie de l'arc de renvoi (6) de corps roulants se trouvant dans la cage (8, 24) et la partie se trouvant dans la pièce de tête (9) s'étendent, chacune, au travers d'un angle de 90°.

4. Palier à roulement selon la revendication 2, caractérisé en ce que l'angle entre les deux plans des rangées de corps roulants est de 90°.

5. Palier à roulement selon la revendication 1, caractérisé en ce que les pièces de tête (9) comprennent des tenons de fixation (16) qui font saillie vers l'intérieur et s'engagent de manière ajustée dans des évidements correspondants (17) des cages (8), et en ce que, sur les pièces de tête (9) et sur les cages (8) sont formés, chacun par une partie de la pièce de tête (9) et par une partie de la cage (8), des tenons communs de fixation (18) qui font saillie vers l'extérieur.

6. Palier à roulement selon la revendication 1, caractérisé en ce qu'en section droite, les pistes de roulement formées sur le corps de support (1) et sur le rail de guidage (2) pour les rangées de corps roulants transmettant la charge sont agencées en pente de manière à former des angles de pression (α, β) avec les normales (34, 35, 36), les angles de pression (α) d'une paire de circulations à corps roulants étant différents, en chaque cas, des angles de pression (β) d'une autre paire de circulations à corps roulants.

7. Palier à roulement selon la revendication 6, caractérisé en ce que les pistes de roulement de corps roulants sont des pistes de roulement (29, 30) de billes dont les tangentes centrales (31, 32, 33) forment les angles de pression (α, β) avec les normales (34), l'angle de pression (β) de la paire centrale de circulations à corps roulants étant supérieur à l'angle de pression (α) de la paire supérieure et de la paire inférieure de circulations à corps roulants.

8. Palier à roulement selon la revendication 7, caractérisé en ce que l'angle de pression (α) de la paire supérieure et de la paire inférieure de circulations à corps roulants est de 45° et l'angle de pression (β) de la paire centrale de circulations à corps roulants est de 60°.

9. Palier à roulement selon la revendication 1, caractérisé en ce qu'en section droite, les pistes de roulement formées sur le rail de guidage (2) et sur le corps de support (1) pour les rangées de corps roulants transmettant la charge sont agencées en pente de manière à former avec des normales, des angles de pression (α) qui sont égaux pour toutes les paires de circulations à corps roulants.

10. Palier à roulement selon la revendication 9, caractérisé en ce que les pistes de roulement de corps roulants sont configurées sous la forme de pistes de roulement (29, 30) de billes dont les tangentes centrales (31, 32, 33) forment les angles de pression (α) avec les normales (34, 35, 36).
